# EUROPEAN PATENT APPLICATION

(11) **EP 4 671 470 A1**
(43) Date of publication of application: **31.12.2025**
(21) Application number: 23923627.6
(22) Date of filing: 13.07.2023
(51) Int. Cl.: E05B 15/00

(54) **CATHODE LOCK**

(30) Priority: 20.02.2023 CN 202320258590 U
(71) Applicant: Metalox Security and Hardware Co., Ltd, Shanghai 200000 (CN)
(72) Inventor: SUN, Xiangyang, Shanghai 200000 (CN)
(74) Representative: Calysta NV
(86) International application number: PCT/CN2023/107200
(87) International publication number: WO 2024/174459

(57) **Abstract**

The present invention discloses an electric strike which includes a lock body, a latch and a stopping device. The latch is rotatably connected to the lock body. The stopping device is mounted on the lock body. The stopping device comprises a shaft, a keeper and a holding assembly for holding the keeper on the shaft. The holding assembly comprises a retaining member, a fixing member fixedly mounted on the keeper, and a first elastic member connected between the retaining member and the fixing member. The fixing member is used to fix the first elastic member to the keeper. In the restricted state, the first elastic member is compressed to drive the retaining member to hold on the shaft. The keeper in the electric strike of the present invention can be securely mounted on the shaft, and it is easy to adjust the relative position of the keeper on the shaft.

## Description

The present invention claims the priority of Chinese Invention No. 2023202585902 , filed in Chinese Patent Office on February 20, 2023, and entitled "Electric Strike", the entire contents of which are herein incorporated by reference.

### Technical Field

The present invention relates to a lock structure, in particular to an electric strike.

### Background Art

An electric strike generally utilize the latch-bolt on the door to push a latch of the lock to rotate, so as to achieve unlocking or locking operation. Current electric strikes generally use a stopping device to achieve locking or unlocking of the latch. The stopping device usually includes a shaft and a keeper arranged on the shaft, and the position of the keeper is adjusted to achieve the locking or unlocking of the latch. In the current electric strikes, the keeper is fastened on the shaft by means of screws or bolts. Although the screws or bolts play a role in fixing, but their installation is cumbersome, and when the position of the keeper on the shaft needs to be adjusted, the adjustment steps are cumbersome and time-consuming.

The information disclosed in this background art section is intended only to add to the understanding of the general background of the utility model and should not be taken to acknowledge or in any way imply that the information constitutes prior art already known to those of ordinary skill in the art.

### Summary of the Invention

The objective of the present invention is to provide an electric strike in which a keeper can be securely held on a shaft and in which it is easy to adjust the relative position of the keeper on the shaft.

To this end, the present invention provides an electric strike which includes a lock body, a latch and a stopping device. The latch is rotatably connected to the lock body. The stopping device is mounted on the lock body. The stopping device comprises a shaft, a keeper and a holding assembly for holding the keeper on the shaft. The holding assembly comprises a retaining member, a fixing member fixedly mounted on the keeper, and a first elastic member connected between the retaining member and the fixing member. The fixing member is used to fix the first elastic member to the keeper. In the restricted state, the first elastic member is compressed to drive the retaining member to be held on the shaft.

The keeper has a locking position for locking the latch and an unlocking position for unlocking the latch. In the locking position, the keeper is located on a rotation path of the latch to restrict the rotation of the latch.

In one or more embodiments of the present invention, the keeper is provided with a receiving hole and the first elastic member is mounted in the receiving hole.

In one or more embodiments of the present invention, an opening of the receiving hole is provided on an outer peripheral surface of the keeper, the fixing member is provided on the outer peripheral surface of the keeper, and one end of the first elastic member is connected to the fixing member.

In one or more embodiments of the present invention, the outer peripheral surface of the keeper is provided with a fixing groove, and the fixing member is installed in the fixing groove.

In one or more embodiments of the present invention, the fixing groove is connected to the receiving hole.

In one or more embodiments of the present invention, a first groove and a second groove for holding the retaining member, are provided at intervals on the peripheral surface of the shaft. **In** the restricted state, the retaining member is held in the first groove or the second groove on the shaft.

In one or more embodiments of the present invention, the electric strike further comprises an electric drive device mounted on the lock body, for driving the keeper of the stopping device between a locking position and an unlocking position, to lock or unlock the latch.

In one or more embodiments of the present invention, the electric drive device comprises a solenoid and a spindle. In an energized state, the solenoid generates a magnetic force to attract the spindle to move, and the spindle pushes the stopping device to move during movement, to drive the keeper to switch between the locking position and the unlocking position.

In one or more embodiments of the present invention, the shaft is also provided with a second elastic member. One end of the shaft is provided with a restrictor component, and both ends of the second elastic member are connected to the restrictor component as well as to the lock body respectively.

In an energized state, the second elastic member is in a compressed state. In a de-energized state, the second elastic member drives the stopping device as well as the spindle to return to the original position.

In one or more embodiments of the present invention, the lock body is provided with a guide hole, and the stopping device is slidingly connected to the guide hole.

Compared with the prior art, the electric strike according to the present invention hoids the keeper on the shaft by a holding assembly, and since the holding assembly uses the elasticity of the first elastic member to drive the retaining member to be clamped on the shaft. When the relative position of the keeper on the shaft needs to be adjusted, it is only necessary to directly forcefully move the keeper to the desired position, which can be realized to adjust the relative position of the keeper on the shaft, so that the adjusting process is convenient and short time-consuming.

### Brief Description of the Drawings

FIG. 1 is a schematic view of an electric strike according to an embodiment of the present invention.
FIG. 2 is a section view of an electric strike according to an embodiment of the present invention.
FIG. 3 is a schematic view of a stopping device according to an embodiment of the present invention.
FIG. 4 is a A-A sectional view of FIG. 3.

Explanation of the signs in the drawings:
1, lock body; 11, guide hole; 12, adjustment groove; 2, latch; 3, stopping device; 31, shaft; 311, first groove; 312, second groove; 313, restrictor component; 32, keeper; 321, receiving hole; 322, fixing groove; 33, holding assembly; 331, retaining member; 332, fixing member; 333, first elastic member; 4, electric drive device; 41, solenoid; 42, spindle; 5, second elastic member.

### Detailed Description of the Invention

The specific embodiments of the present invention are described in detail below in conjunction with the accompanying drawings, but it should be understood that the scope of protection of the present invention is not limited by the specific embodiments.

Unless otherwise expressly indicated, the term " including " or its variations such as " comprising " or " consisting of " and the like, shall be understood to include the elements or components recited and not to exclude other elements or other components throughout the specification and the claims.

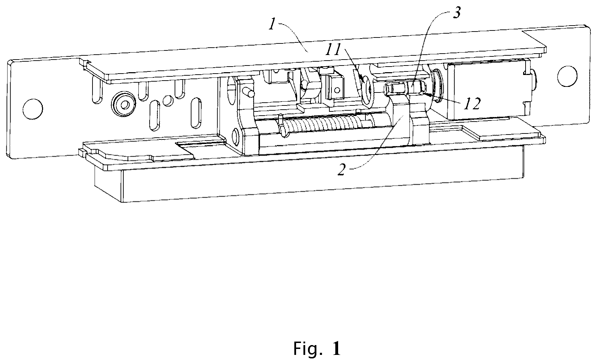

As shown in Fig.1-4, according to one embodiment of the present invention, an electric strike comprises a lock body 1, a latch 2 and a stopping device 3. The latch 2 is rotatably connected to the lock body 1. The stopping device 3 is mounted on the lock body 1. The stopping device 3 comprises a shaft 31, a keeper 32, and a holding assembly 33 for holding the keeper 32 on different positions of the shaft 31 so that the keeper 32 can be at a locking position or an unlocking position. The holding assembly 33 comprises a retaining member 331, a fixing member 332 and a first elastic member 333. The retaining member 331 is arranged in the keeper 32. The fixing member 332 is fixedly mounted on the keeper 32 and used to fix the first elastic member 333 to the keeper 32, and the first elastic member 333 is connected between the retaining member 331 and the fixing member 332. When the keeper 32 is held onto certain position of the shaft 31, the first elastic member 333 is compressed to drive the retaining member 331 to be held on the shaft 31.

The keeper 32 has a locking position for locking the latch 2 and an unlocking position for unlocking the latch 2. In the locking position, the keeper 32 is located on a rotation path of the latch 2 to restrict the rotation of the latch 2, so as to lock the latch 2.

It is understandable that since the holding assembly 33 uses the elasticity of the first elastic member 333 to drive the retaining member 331 to be clamped on different positions of the shaft 31, when it is necessary to adjust the relative position of the keeper 32 on the shaft 31 so as to adjust the electric strike to be at a normally locking state or a normally unlocking state, a user only needs to move the keeper 32 with a certain force to the desired position to adjust the relative position of the keeper 32 on the shaft 31. The above adjustment process is simple, convenient and time-saving, and it is easy for the user to adjust the relative position of the keeper 32 on the shaft 31.

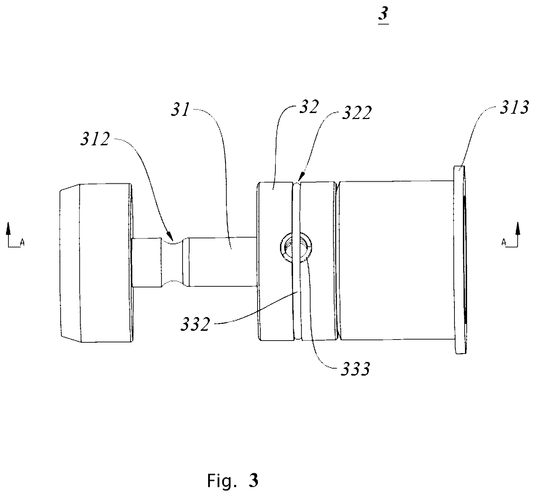

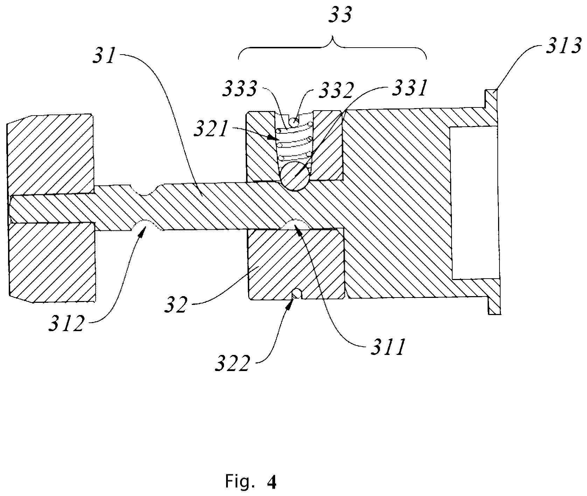

In one embodiment, a first groove 311 and the second groove 312 are arranged at intervals on the peripheral surface of the shaft 31, and the retaining member 331 may be spherical-shaped. The spherical-shaped retaining member 331 can be confined in the first groove 311 or the second groove 312 of the shaft 31 by the first elastic member 333, so as to be in a locking position or an unlocking position. This configuration increases the force that holds the retaining member 331 on the shaft 31. As shown in Fig. 3 and 4, the retaining member 331 is retained in the first groove 311, thereby increasing the retention force between the retaining member 331 and the shaft 31.

As shown in Fig. 3 and 4, in one embodiment, a receiving hole 321 is provided on the keeper 32. The first elastic member 333 is installed in the receiving hole 321 which can restrict and hold the first elastic member 333.

Specifically, the first elastic member 333 can be a compression spring, which can be installed in the receiving hole 321. The receiving hole 321 is sized to match the outer diameter of the compression spring, and when the compression spring undergoes compression and elongation deformation, the receiving hole 321 restricts the direction of deformation and prevents the compression spring from bending or deviating sideways.

Specifically, an opening of the receiving hole 321 is provided on an outer peripheral surface of the keeper 32, the fixing member 332 is provided on the outer peripheral surface of the keeper 32, and one end of the first elastic member 333 is connected to the fixing member 332.The receiving hole 321 may have two openings, one opening provided on the inner peripheral surface of the keeper 32 and the other opening provided on the outer peripheral surface of the keeper 32.

Specifically, a fixing groove 322 is provided on the outer peripheral surface of the keeper 32, and the fixing member 332 is mounted in the fixing groove 322. The fixing groove 322 may serve to restrict the installation position of the fixing member 332, and also facilitate the installation of the holding assembly 33 on the keeper 32.

Further, the fixing groove 322 is connected to the receiving hole 321. Specifically, the fixing member 332 may be a snap ring, which is clamped on the outer peripheral face of the keeper 32, and the fixing groove 322 is connected to the receiving aperture 321 may enable one end of the first elastic member 333 to resist against the fixing member 332, and cooperate with the receiving hole 321 as well as the retaining member 331 may play a role in mounting and restricting the first elastic member 333.

In addition, the peripheral surface of the shaft 31 is provided with a first groove 311 and a second groove 312 at intervals. The retaining member 331 is clamped in a different groove, which can keep the electric strike in the normally opening state or in the normally locking state.

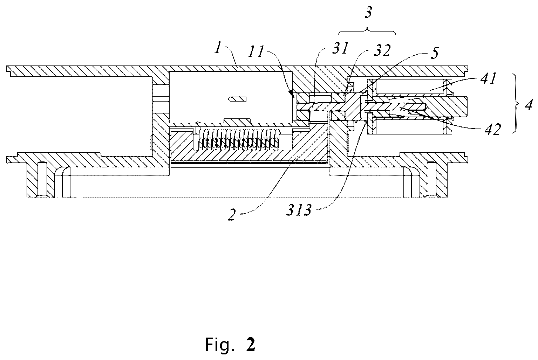

As shown in Fig.1 and 2, the electric strike may also comprise an electric drive device 4 mounted on the lock body 1 for driving the keeper 32 of the stopping device 3 to switch between the locking position and the unblocking position for locking or unlocking the latch 2.

In one embodiment, as shown in Fig.3 and 4, the retaining member 331 is clamped in the first groove 311, so that in the de-energized state, the keeper 32 is in the unlocking position to unlock the latch 2, i.e., the latch 2 is in the unlocking state; in the energized state, the electric drive device 4 drives the keeper 32 of the stopping device 3 to move to the locking position, thereby locking latch 2. Therefore, when the retaining member 331 is held in the first groove 311, it can be considered that the electric strike is in the normally opening state. The normally opening state can be considered as follows: when the electric drive device 4 is de-energized, the electric strike is in the unlocking state; when the electric drive 4 is energized, the electric strike is in the locking state.

In another embodiment (not shown in the accompanying drawings), the retaining member 331 is clamped in the second groove 312, so that in the de-energized state, the keeper 32 is in the locking position for locking the latch 2, i.e., the locking latch 2 is in the locking state. In the energized state, the electric drive device 4 drives the keeper 32 of the stopping device 3 to move to the unlocking position, thereby unlocking the latch 2. Therefore, when the retaining member 331 is clamped in the second groove 312, it can be considered that the electric strike is in the normally locking state. The normally locking state can be considered as follows: when the electric drive device 4 is de-energized, the electric strike is in the locking state; when the electric drive device 4 is energized, the electric strike is in the unlocking state.

As shown in Fig. 2, in one embodiment, the electric drive device 4 includes a solenoid 41 and a spindle 42. When energized, the solenoid 41 generates a magnetic force to attract the spindle 42 to move. During movement, the spindle 42 pushes the stopping device 3 to move, so as to drive the keeper 32 to switch between the locking position and the unlocking position.

Specifically, a second elastic member 5 is provided on the shaft 31 . One end of the shaft 31 is provided with a restrictor component 313. The second elastic member 5 is connected at both ends between the restrictor component 313 and the lock body 1. When energized, the second elastic member 5 is in a compressed state; when de-energized, the second elastic member 5 drives the stopping device 3 and the spindle 42 to return to the original position. The second elastic member 5 can be considered to be supported between the restrictor component 313 and the locking body 1. The position of the second elastic member 5 can be adjusted according to whether the retaining member 331 is clamped on the shaft 31 in the first groove 311 or the second groove 312. For example, in Fig.3 and 4, when the retaining member 331 is held in the first groove 311 of the shaft 31, the second elastic member 5 is installed in the position. In other embodiment, for example when the retaining member 331 is held in the second groove 312 of the shaft 31, the position of the second elastic member 5 can be adjusted according to the actual situation. The second elastic member 5 can be a compression spring.

As shown in Fig. 2, in one embodiment, a guide hole 11 is provided on the lock body 1, and the stopping device 3 is slidably connected to the guide hole 11. The guide hole 11 guides and restrict the sliding direction of the braking device 3 within the lock body 1.

Specifically, the lock body 1 is provided with an adjustment groove 12, and the adjustment groove 12 is connected to the guide hole 11. In this way, the hands of the user or tools can directly pass through the adjustment groove 12 and move the keeper 32, thereby adjusting the position of the keeper 32 on the shaft 31.

In summary, the beneficial effects of the electric strike of the present invention are as follows: by replacing the bolts with a holding assembly to fix the keeper on the shaft, it is easier to adjust the position of the keeper on the shaft, which improves the installation efficiency of the electric strike. It is also easier to switch the electric strike from the normally opening state to the normally locking state.

The foregoing description of specific exemplary embodiments of the invention is for purposes of description and illustration. They are not intended to restrict the invention to the precise forms disclosed, and it is evident that many changes and variations can be made in accordance with the above teachings. The exemplary embodiments are selected and described for the purpose of explaining particular principles of the invention and its practical application, so that persons skilled in the art can implement and utilize the various exemplary embodiments of the invention as well as the various options and variations. The scope of the invention is intended to be defined by the claims and their equivalents.

## Claims

1. An electric strike, comprising:
a lock body;
a latch rotatably connected to the lock body; and
a stopping device mounted on the lock body; the stopping device comprising a shaft, a keeper and a holding assembly for holding the keeper on the shaft, the holding assembly comprising a retaining member, a fixing member fixedly mounted on the keeper, and a first elastic member connected between the retaining member and the fixing member; the fixing member used to fix the first elastic member to the keeper;
wherein in a restricted state, the first elastic member is compressed to drive the retaining member to hold on the shaft; and
wherein the keeper has a locking position for locking the latch and an unlocking position for unlocking the latch; in the locking position, the keeper is located on a rotation path of the latch to restrict the rotation of the latch.

2. The electric strike as claimed in claim 1, wherein the keeper is provided with a receiving hole and the first elastic member is mounted in the receiving hole.

3. The electric strike according to claim 2, wherein an opening of the receiving hole is provided on an outer peripheral surface of the keeper, the fixing member is provided on the outer peripheral surface of the keeper, and one end of the first elastic member is connected to the fixing member.

4. The electric strike as claimed in claim 3, wherein the outer peripheral surface of the keeper is provided with a fixing groove, and the fixing member is installed in the fixing groove.

5. The electric strike as claimed in claim 4, wherein the fixing groove is connected to the receiving hole.

6. The electric strike as claimed in claim 1, wherein a first groove and a second groove for holding the retaining member are provided at intervals on the peripheral surface of the shaft; and
wherein in the restricted state, the retaining member is retained in the first groove or the second groove on the shaft.

7. The electric strike as claimed in claim 1, further comprising an electric drive device mounted on the lock body, for driving the keeper of the stopping device between a locking position and an unlocking position, to lock or unlock the latch.

8. The electric strike according to claim 7, wherein the electric drive device comprises a solenoid and a spindle; in an energized state, the solenoid generates a magnetic force to attract the spindle to move, and the spindle pushes the stopping device to move during movement, to drive the keeper to switch between the locking position and the unlocking position.

9. The electric strike as claimed in claim 8, wherein the shaft is also provided with a second elastic member, one end of the shaft is provided with a restrictor component, and both ends of the second elastic member are connected to the restrictor component as well as to the lock body respectively;
wherein in an energized state, the second elastic member is in a compressed state; and
wherein in a de-energized state, the second elastic member drives the stopping device as well as the spindle to return to the original position.

10. The electric strike as claimed in claim 1, wherein the lock body is provided with a guide hole, and the stopping device is slidingly connected to the guide hole.
